# EUROPÄISCHE PATENTSCHRIFT

(11) **EP 1 458 795 B1**
(45) Veröffentlichungstag und Bekanntmachung des Hinweises auf die Patenterteilung: **05.04.2006**
(21) Anmeldenummer: 01275147.5
(22) Anmeldetag: 28.12.2001
(51) Int. Cl.: C08J 9/00

(54) **FORMBARE PLASTISCHE MASSE, VERBUNDMATERIAL, VERFAHREN ZU IHRER HERSTELLUNG UND IHRE VERWENDUNG ALS LEICHTISOLIERMATERIAL**
DEFORMABLE PLASTIC MASS, COMPOSITE MATERIAL, METHOD FOR PRODUCING THE SAME, AND THE USE THEREOF AS A LIGHTWEIGHT INSULATING MATERIAL
MASSE A DEFORMATION PLASTIQUE, MATERIAU COMPOSITE, LEUR PROCEDE DE PRODUCTION ET LEUR UTILISATION EN TANT QUE MATERIAU LEGEREMENT ISOLANT

(43) Veröffentlichungstag der Anmeldung: 22.09.2004
(73) Patentinhaber: Lefatex Chemie GmbH, 41379 Brüggen-Bracht (DE)
(72) Erfinder: THÖLEN, Axel, 47906 Kempen (DE)
(74) Vertreter: Klöpsch, Gerald
(86) Internationale Anmeldenummer: PCT/EP2001/015366
(87) Internationale Veröffentlichungsnummer: WO 2003/064507

(56) Entgegenhaltungen:
- US-A- 5 569 513
- US-A- 5 691 392
- US-A- 6 121 336

## Beschreibung

Die Erfindung betrifft eine formbare plastische Masse, ein Verbundmaterial, Verfahren zu ihrer Herstellung sowie ihre Verwendung als Leichtisoliermaterial.

Füllstoffhaltige Polymerdispersionen, die beispielsweise in Klebstoffen oder Oberflächenbeschichtungsmitteln Anwendung finden und in denen die Polymerteilchen als Kleber wirken und bei denen der Füllstoff in der wäßrigen Polymerdispersion dispergiert ist, sind aus der DE 199 59 916 A1 bekannt.

In der Textilindustrie haben Polymerdispersionen mit unterschiedlichen Glastemperaturen durch ihre leichte Handhabbarkeit und Umweltverträglichkeit erhebliche Bedeutung erlangt. Diese Dispersionen werden heute als Binder für Non-Woven, als Flockkleber, zur Ausrüstung, Appretur usw. eingesetzt. So lassen sich bei der Ausrüstung von z. B. Textilien (Appretur) das Erscheinungsbild, die physikalischen Eigenschaften, die Handhabung und die Anwendung durch Polymerdispersionen beeinflussen.

Aus der WO 98/07780 ist ein Aerogel- und kunststoffhaltiges, transparentes Verbundmaterial sowie seine Verwendung zur Wärmedämmung bekannt. Bei den sogenannten Aerogelen handelt es sich um ein neueres, handelsübliches hochporöses Material, das aus Silizium- oder Metalloxiden besteht. Seine Dichte beträgt üblicherweise 70 bis 300 kg/m³ bei einer inneren Oberfläche von bis zu 1000 m²/g. Dieser neue Werkstoff Aerogel wirkt thermisch isolierend und besitzt insbesondere einen Wärmeleitfaktor von k < 29mW/(mK) und ist somit insbesondere ein hervorragender thermischer Isolator. Unter Aerogelen im weiteren Sinn sind Kieselgele mit Luft als Dispersionsmittel zu verstehen, die durch Trocknung eines geeigneten Gels hergestellt werden.

Als Aerogel im engeren Sinn wird ein getrocknetes Gel verstanden, dessen Flüssigkeit bei Temperaturen oberhalb der kritischen Temperatur und oberhalb des kritischen Drucks weitgehend entfernt worden ist. Wird die Flüssigkeit des Gels dagegen unterkritisch, beispielsweise unter Bildung einer Flüssig-Dampf-Grenzphase entfernt, so wird das Gel als Xerogel bezeichnet. Dabei wird zur Herstellung des Verbundmaterials stets ein Aerogel und ein Kunststoff in Pulverform miteinander vermischt.

Gemäß der EP 0 340 707 B1 wird ein Dämmstoff durch Beschichten eines Aerogels mit einem Bindemittel hergestellt.

Verschiedene wäßrige Verfahren zur Herstellung von Aerogelen durch über- bzw. unterkritische Trocknung werden zum Beispiel in der EP-A-0 396 076, der WO 92/103378, der WO 94/124149, der WO 92/120623 und der EP-A-0 658 513 beschrieben.

In der US 5,569,513 ist Gelatine als Zusatz für ein Herstellungsverfahren von Isolierungen mit wärmeisolierenden aerogelhaltigen Schäumen vorgeschlagen worden. Die Herstellung erfolgt, indem eine wäßrige Gelatinelösung, als Schaumbildner, bereits mit einem Aerogel kombiniert und diese Mischung dann mechanisch unter Bildung eines Schaums gerührt wird. Der Schaum wird dann unter Bildung einer schlecht wärmeleitenden Verbundmasse getrocknet.

Die Verbundmasse aus geschäumter Gelatine und dem Aerogel kann maximal bis zu 98 Gew.-% ,bezogen auf die Trockensubstanz, an Aerogel enthalten. Der Mindestgehalt ist 5 Gew.%. Der Maximalgehalt an Gelatine kann etwa 47 Gew.-%, der Minimalgehalt etwa 2 Gew.-%, wieder bezogen auf das Trockengewicht, sein.

Die Lehre der US 5,569,513 geht davon aus, daß es bei der Herstellung eines Schaums mit Gelatine als Zusatzmittel möglich ist, das hydrophobe Aerogel bereits bei der Herstellung des Schaums mit einzubeziehen und dabei das Aerogel leicht und gleichförmig zu dispergieren und die Menge eines nicht näher bezeichneten Bindemittels zu minimieren. Die Konsistenz des Schaums ließe die Adhäsion an dem hydrophoben Aerogel während der Trocknung zu, ohne daß es entfeuchtet würde oder die Adhäsion wie bei einer nicht aufgeschäumten Masse verlöre. Dabei könnten die zunächst hergestellten wärmeisolierenden Massen auch einen Binder enthalten, dessen Anteil jedoch aufgrund der Verwendung von Gelatine gering gehalten ist, nämlich in Mengen von 0,1 bis 30 Gew.-%, bezogen auf die Trockensubstanz. Solche Binder könnten zum Beispiel auf einem organischen Polymer basierende Binder, wie ein Latex, sein, beispielsweise Styrol-Butadien-Kautschuk oder Nitrilkautschuk usw.. Vorzugsweise enthält die Masse gar keinen Binder. Eine Trocknung könnte bei etwa 93,3°C(200°) erfolgen.

Ein solches Verfahren mit Gelatine als Zusatz, bei dem die Menge an Binder ganz oder teilweise auf maximal 30 Gew.-% beschränkt ist, weist den Nachteil auf, daß die vorteilhaften Eigenschaften eines Bindemittels in bezug auf den verwendeten hydrophoben Füllstoff nicht ausgenutzt werden können. Insbesondere hat ein solches Verfahren bei Verwendung von Gelatine und weitgehender Vermeidung von Binder den Nachteil, daß die vorteilhaften Eigenschaften eines Bindemittels in bezug auf den verwendeten hydrophoben Füllstoff nicht ausgenutzt werden können. Die Verwendung von Gelatine und weitgehende Vermeidung von Binder hat den Nachteil, daß so hergestellte Schäume eine geringere Flexibilität und Festigkeit aufweisen. Wie in der US 5,569,513 gezeigt, wird durch den Einsatz von Glasfasern die Festigkeit gesteigert. Es bleiben jedoch die physikalischen Eigenschaften der getrockneten Gelatine erhalten. Somit läßt sich dieses System nur für ganz spezielle Anwendungen, z. B. Rohrisolationen, einsetzen.

Während die durch überkritische Trocknung erhaltenen Aerogele im allgemeinen hydrophil oder nur kurzzeitig hydrophob sind, sind die unterkritisch getrockneten Aerogele, bedingt durch ihr Herstellungsverfahren (Silylierung vor der Trocknung) dauerhaft hydrophob. Wie in der DE 197 52 456 A und der DE 198 01 004 A1 beschrieben, werden zur Herstellung von Lyogelen und Aerogelen wasserlösliche Silylierungsmittel eingesetzt. Die bevorzugten Silylierungsmittel sind Trimethylchlorsilan, Trimethylsiloxan, Hexamethyldisilazan und Hexamethyldisiloxan. Das getrocknete Gel hat noch einen Restgehalt von ca. 0,1 Gew.-% des Silylierungsmittels. Die so hergestellten Aerogele sind hydrophob. Die Hydrophobizität ist dauerhaft. Die hohe Porosität (üblicherweise mehr als 90 %) der dauerhaft hydrophoben Aerogele führt allerdings auch zu einer geringen mechanischen Stabilität sowohl des Aerogels selbst als auch des getrockneten Aerogels. Der dauerhaft hydrophobe Charakter der vorstehend beschriebenen Art von Aerogelen führt dazu, daß es schwierig ist, dauerhaft hydrophobe Füllstoffe, wie die vorstehend genannten hydrophoben Aerogelen, in wäßrigen Polymerdispersionen, die als Bindemittel dienen können, herzustellen. Denn hydrophobe Stoffe lassen sich nur schlecht benetzen, ohne daß ihre innere hochporöse, für das geringe Wärmeleitvermögen verantwortliche empfindliche Struktur unverändert bleibt. Eine Veränderung führt in der Regel zur Erhöhung der Wärmeleitfähigkeit und damit Verschlechterung der Isolierwirkung.

Aufgabe der vorliegenden Erfindung ist es, ein Herstellungsverfahren für eine formbare plastische Masse und ein Verbundmaterial anzugeben, bei dem ein hydrophober Füllstoff mit geringem Wärmeleitvermögen derart in ein flüssiges Bindergemisch eingearbeitet wird, daß sich die Wärmeleitfähigkeit des Füllstoffs nicht nennenswert verschlechtert.

Weiter ist es Aufgabe der Erfindung, eine formbare plastische Masse und ein Verbundmaterial, insbesondere eine thermisch isolierende, formbare plastische Masse und ein thermisch isolierendes Verbundmaterial, vorzugsweise mit geringem spezifischem Gewicht, anzugeben.

Die Aufgabe bezüglich des Herstellungsverfahrens wird erfindungsgemäß zum einen durch ein Verfahren zur Herstellung einer formbaren plastischen Masse gelöst, bei dem wenigstens aus
- einem Bindemittel, das zu überwiegendem Teil eine wäßrige Polymerdispersion aus der Gruppe, bestehend aus: Polyacrylaten, Polyurethanen, Cycloolefin-Copolymeren, Ethylen-Vinylacetat-Copolymeren, Styrol-Butadien-Copolymeren, Styrol-Acrylat-Copolymeren, Siliconen, Isocyanatsystemen und Celluloseethern, enthält, und
- einem Schaumbildungsmittel,
- ein flüssiges Bindergemisch gebildet wird, und zunächst
- das flüssige Bindergemisch, entweder mechanisch und/oder mittels Injektion eines Gases in das flüssige Bindergemisch, aufgeschäumt wird, und dann.
- ein hydrophober thermisch isolierend wirkender Füllstoff, insbesondere ein hydrophobes Aerogel, in das aufgeschäumte Bindergemisch unter Bildung der formbaren plastischen Masse eingebracht wird.

Die Aufgabe bezüglich des Herstellungsverfahrens wird erfindungsgemäß zum anderen durch ein Verfahren zur Herstellung eines Verbundmaterials gelöst, bei dem wenigstens aus.
- einem Bindemittel, das zu überwiegendem Teil eine wäßrige Polymerdispersion aus der Gruppe, bestehend aus: Polyacrylaten, Polyurethanen, Cycloolefin-Copolymeren, Ethylen-Vinylacetat-Copolymeren, Styrol-Butadien-Copolymeren, Styrol-Acrylat-Copolymeren, Siliconen, Isocyanatsystemen und Celluloseethern, enthält, und
- einem Schaumbildungsmittel, ausgenommen Gelatine,
- ein flüssiges Bindergemisch gebildet wird, und zunächst
- das flüssige Bindergemisch, entweder mechanisch und/oder mittels Injektion eines Gases in das flüssige Bindergemisch, aufgeschäumt wird, und dann
- ein hydrophober thermisch isolierend wirkender Füllstoff, insbesondere ein hydrophobes Aerogel, in das aufgeschäumte Bindergemisch unter Bildung einer formbaren plastischen Masse eingebracht wird, und
- die plastische Masse in einer bestimmten Form verfestigt wird.

Bei den Herstellungsverfahren für die formbare plastische Masse und das Verbundmaterial wird also der thermisch isolierend wirkende Füllstoff, insbesondere das hydrophobe Aerogel, in das bereits aufgeschäumte Bindergemisch eingebracht. Der thermisch isolierende Füllstoff ist also nicht an einem Aufschäumvorgang, welcher entweder mechanisch und/oder mittels Injektion eines Gases in das flüssige Bindergemisch vorgenommen werden kann, beteiligt.

Dies hat den Vorteil, daß die innere, hochporöse, für das geringe Wärmeleitvermögen verantwortliche empfindliche Struktur des hydrophoben Füllstoffs, insbesondere des hydrophoben Aerogels, erhalten bleibt. Auf diese Weise bleiben auch die geringe Wärmeleitfähigkeit und die gute Isolierwirkung erhalten. Somit kann eine formbare plastische Masse und ein Verbundmaterial mit besonders guten wärmedämmenden Eigenschaften mit geringem spezifischen Gewicht und geringem Wärmeleitvermögen hergestellt werden.

Eine solche formbare plastische Masse und ein solches Verbundmaterial hat ein hohes Wärmedämmvermögen. Sie weisen etwa 5 bis 99 Gew.-% wenigstens eines Füllstoffs mit hohem Wärmedämmvermögen und wenigstens einen organischen und/oder anorganischen Klebstoff oder Binder sowie gegebenenfalls weitere Hilfsstoffe auf.

Insbesondere kann ein Bindemittel auch im wesentlichen aus einer wäßrigen Polymerdispersion und/oder Siliconemulsion und/oder Isocyanten und/oder Cellulose und/oder Styrolacrylat bestehen. Dem Bindemittel wird ein Schaumbildner zugesetzt und das flüssige Bindergemisch entweder mechanisch und/oder mittels Injektion eines Gases in das flüssige Bindergemisch aufgeschäumt. Erst danach wird ein hydrophober Füllstoff in das aufgeschäumte Bindergemisch eingearbeitet, und das resultierende Gemisch aus Bindergemisch und Füllstoff wird dann in eine beliebige gewünschte Form gebracht und anschließend getrocknet

Die Verwendung der genannten Bindemittel bei den genannten Herstellungsverfahren ermöglicht es, daß die physikalischen Eigenschaften des hydrophoben Füllstoffs im Vordergrund stehen. So läßt sich auch eine höhere Flexibilität und Festigkeit der insbesondere aerogelhaltigen Schäume erreichen. Durch Veränderung des Warenbildes des hydrophoben Füllstoffs, und insbesondere der hydrophoben Aerogele, durch chemische Mittel, wie der genannten Polymerdispersionen, läßt sich vorteilhaft eine breite Palette neuartiger und Verbundmaterialien und plastische Massen bedarfsgerecht herstellen.

Als Bindemittel sind insbesondere Bindemittelsysteme, im Regelfall wäßrige Polymerdispersionen geeignet. Hier seien Acrylat- und Polyurethandispersionen, Dispersionen auf Basis von Cycloolefin-Copolymen, Ethylen-Vinylacetat-Copolymeren, Styrol-Butadien-Copolymerisaten, Styrol-Acrylat-Copolymerisaten, Siliconsysteme und Isocyanatsystemen genannt.

Durch die mengenmäßige Veränderungen der Grundpolymere der wäßrigen Polymerdispersion werden verschiedene Glastemperaturen erreicht. So ergeben sich bei den im folgenden genannten Mischungen die entsprechend genannten Eigenschaften des Verbundmaterials:

| Zusammensetzung | Festigkeit des Verbundmaterials |
|---|---|
| Acrylaten/Methacrylaten | hart (spröde) bis flexibel weich |
| Vinylacetat | fest bis hart (spröde) |
| Vinylacetat/DBM | hart bis flexibel |
| Vinylacetat/Acrylaten | hart bis sehr flexibel |
| Vinylacetat/Ethylen | mittelfest bis sehr weich flexibel |
| Styrol/Acrylaten | hart (spröde)bis flexibel weich |
| Acrylnitril/Acrylaten | hart (spröde) bis flexibel weich |
| Copolymere aus Vinylacetat mit Acrylester | Glastemperatur von +50 bis -40°C sehr hart bis sehr weich flexibel |

Insbesondere weisen die folgenden Produkte wenigstens das entsprechend genannte Polymer auf, so daß sich die entsprechend genannten Eigenschaften des Verbundmaterials ergeben:

| Produkt | Polymer | Festigkeit des Verbundmaterials |
|---|---|---|
| Lefasol 158/1 | Polyvinylacetatacrylat | fest bis hart (spröde) |
| Lefasol 165 | Polyvinylacetatmaleinat | fest elastisch |
| Lefasol 214 | Acrylat/Acrylnitril | weich elastisch |
| Lefasol 204 | Polyacrylat | mittelfest |
| Lefasol 202 | Polyacrylat | flexibel weich |
| Lefasol 206 | | sehr hart |
| Lefasol 48/90 | | mittelhart elastisch |
| Lefasol 47/90 | | hart, spröde |
| Lefasol 171 | | weich elastisch |
| Lefasol 172 | | mittelhart elastisch |

Besonders bevorzugt wird Styrolacrylat als Bindemittel eingesetzt.

Styrolacrylat hat den Vorteil, daß es als Bindemittel für Füllstoffe, insbesondere für hydrophobe Aerogele, eingesetzt zu einer selbständigen Verfestigung des Bindergemisches führt. Diese überraschende Feststellung beruht auf der Erkenntnis, daß hydrophobe Aerogele nicht hydrophiliert, also für Wasser benetzbar gemacht, werden müssen, sondern sich in ein bereits vorhandenes Schaumgebilde einarbeiten lassen, obwohl der Benetzungswinkel > 100° beträgt. Durch die nicht durchzuführende Hydrophilierung bleibt die Hydrophobizität der Aerogele weiterhin dauerhaft. Dies hat den Vorteil, daß ihre hochporöse, für das geringe Wärmeleitvermögen verantwortliche empfindliche Struktur unverändert bleibt.

Vorteilhaft ist dabei auch die hohe Klebkraft des wie erläutert verwendeten Binders und die Eigenschaften des Emulgatorsystems. Schließlich ermöglichen auch hochsiedende Lösungsvermittler die Bindung zum Aerogel.

Als Schaumbildungsmittel sind vorzugsweise oberflächenaktive Stoffe wie Ionogene, Sulfonate und/oder anionische Tenside geeignet.

Insbesondere eignen sich als Schaumbildungsmittel Alkyldimethylarninoxid, Alkylsulfonat, Fettsäuremethyltaurid-Na, Sulfosuccinat, Oxoalkoholoxethylat, Nonylphenoloxethat und Alkylarypolyglykolethersulfat-Na.

Die genannten bevorzugten Bindemittelsysteme weisen insbesondere in Verbindung mit den genannten bevorzugten Schaumbildungsmitteln besonders gute Klebeeigenschaften auf. Es hat sich gezeigt, daß überraschenderweise diese guten Klebeeigenschaften zu einer vorteilhaften Einbindung der Füllstoffe und insbesondere der Aerogele führt. Außerdem entstehen bei den genannten Herstellungsverfahren mit den bevorzugten Bindemitteln aufgrund der günstigen Klebeeigenschaften stabilere Verbindungen.

Gemäß einer besonders bevorzugten Ausführungsform wird Cellulose als Bindemittel eingesetzt. Die Verwendung von Cellulose als Bindemittel erweist sich als besonders vorteilhaft, da bereits 0,5 bis 3 % in Kombination mit einem Schaumbildungsmittel ausreichen, ein Verbundmaterial mit hoher Füllung an Aerogel (96 bis 99 %) herzustellen. Das niedrige Wärmeleitvermögen der Celluloseether und der Aerogele ergeben Verbundmaterialien mit einer Wärmeleitfähigkeit von ca. 18 mW/mK. Durch den geringen organischen Anteil ist dieses Verbundmaterial nicht brennbar bei einer Daueranwendung von < 200°C.

Der Anteil an bevorzugtem Bindemittel (zum Beispiel Cellulose) könnte auch, wenn nötig, über 30 Gew.-% bezogen auf die Gesamtmasse der Trockensubstanz liegen. Dazu wird das Bindergemisch aus Schaumbildungsmittel und flüssigem Bindergemisch mit Bindemittel in einer Menge von oberhalb von 30 Gew.-%, insbesondere deutlich oberhalb von 30 Gew.-%, zum Beispiel 35 Gew.-% und mehr, bezogen auf die Trockensubstanz der plastischen Masse oder des Verbundmaterials gebildet.

Unter Sulfonate sind alle Salze und Ester der Sulfonsäuren der allg. Formel R-SO3X, wobei X ein Metall-Atom (z. B. Na) oder ein Alkyl- bzw. Aryl-Rest sein kann, zu verstehen. Die Einführung der Sulfonsäuregruppe in ein Mol (Sulfonierung) kann beispielsweise durch Addition von Schwefeltrioxid an eine Doppelbindung oder durch Insertion.in eine Esterbindung und nachfolgende Umlagerung erfolgen. Sulfonate weisen eine C-S-Bindung auf und sind streng von den Sulfaten zu unterscheiden, die sich durch eine C-O-S-Bindung auszeichnen. Sulfate spielen eine besondere Rolle als Aniontenside, z. B. Alkylbenzolsulfonate, Alkansulfonate, a-i-Olefinsulfonate, Ethersulfonate oder Estersulfonate. Demgegenüber stellen die sogenannten Ligninsulfonate Sulfite dar. Für eine Reihe von Sulfonaten haben sich Abkürzungen eingebürgert, so zum Beispiel für 4-oluosulfonate (Tosylate), Methansulfonate (Mesylate), 4-Brombenzolsulfonate (Brosylate) oder Trifluormethansulfonate (Triflate).

Dabei bilden Alkylbenzolsulfonate die Gruppe von wichtigen Grenzflächen- und waschaktiven synthetischen Verbindungen (Aniontenside).

Diese umfassen in der Regel einen Alkyl-Rest (in der Regel C8 - C12) und ein einwertiges Kation, bevorzugt Natrium. Von den zur Gruppe der Alkylarensulfonate zählenden Sulfonate hat das Dodecylbenzolsulfonat eine herausragende Stellung unter den Aniontensiden eingenommen, da es nicht nur über ausgezeichnete anwendungstechnische Eigenschaften verfügt, sondern auch - im Gegensatz zu dem bis in die 60er Jahre verbreiteten Tetrapropylenbenzolsulfonat (TPS) - eine hohe Umweltverträglichkeit besitzt.

Unter anionischen Tensiden sind grenzflächenaktive Verbindungen, auch als Aniontenside bezeichnet, mit einer oder mehreren funktionellen anionenaktiven Gruppen, die in wäßrigen Lösungen unter Bildung von Anionen dissoziieren, welche letztlich für die grenzflächenaktiven Eigenschaften verantwortlich sind, zu verstehen. Beispiele für typische anionische Gruppen: COONa, S03Na, OSO3Na, die die Seifen und Alkylarensulfonate (z. B. Dodecylbenzolsulfonat) sowie die Alkansulfonate, a-Olefinsulfonate und Alkylsulfate zu den wichtigsten Tensiden machen (vergleiche Waschmittel).

Die Menge des Schaumbildungsmittels, auch als Schaumbilder bezeichnet, beträgt vorteilhaft 0,05 bis 5 %, vorzugsweise von 0,1 bis 2 %, des Bindergemisches.

Als Füllstoffe sind hydrophobe Füllstoffe geeignet. Neben oder anstatt bevorzugter Aerogele können als Füllstoffe Mikrokugeln auf der Basis von Glas, Keramik oder Kunststoff (zum Beispiel Polyethylen) eingesetzt werden.

Vorteilhaft erfolgt das Aufschäumen des Bindergemisches, auch als Bindermitteldispersion bezeichnet, mechanisch, insbesondere durch Rühren, Eindüsen, Schlagen oder kann auch durch Schütteln bewirkt werden.

Zur Erzeugung des Schaums kann aber auch anstelle oder zusätzlich zur mechanischen Aufschäumung Gas in das flüssige Bindergemisch, welches wenigstens einen Schaumbildner enthält, eingeblasen werden. Als Gas wird vorteilhaft Luft verwendet

Der hydrophobe, thermisch isolierend wirkende Füllstoff wird also gemäß der Erkenntnis der Erfindung nämlich auf besondere Weise in das bereits aufgeschäumte Bindemittel, also in das bereits aufgeschäumte Bindergemisch, eingearbeitet.

Das aufgeschäumte Bindergemisch stellt nämlich ein Schaumgebilde aus gasgefüllten, kugel- oder polyederförmigen Zellen (Poren) dar, welche durch flüssige, halbflüssige oder hochviskose Zellstege begrenzt werden, und das ein Gel darstellt. Die Gasblasen sind wegen der oberflächenverkleinemden Wirkung der Grenzflächenspannung kugelförmig. Die Zellstege, verbunden über sogenannte Knotenpunkte, bilden ein zusammenhängendes Gerüst. Nach der Einarbeitung in den Schaum werden die Aerogele durch die Zellstege und die Knotenpunkte in der Schaummatrix fixiert und/oder mit einem 4 bis 600 nm dünnen Häutchen aufgrund der Filmbildungseigenschaften des verwendeten Schaumbildners/Bindemittels umschlossen. Durch diese Umhüllung bleiben gemäß der Erkenntnis der Erfindung der hydrophobe Charakter und alle physikalischen Eigenschaften der Aerogele erhalten. Die gemäß der vorgeschlagenen Verfahren verwendeten Bindemittel, Schaumbilder und die Schaumbildungsmaßnahmen, sowie die Verfahrensschrittfolge unterstützen diesen erläuterten Prozeß.

Die resultierende plastische Masse kann dann verformt und anschließend verfestigt werden, gegebenenfalls unter Anwendung von Druck bei Temperaturen von 20 bis 180 °C getrocknet werden. Der Schaum dient gemäß der Erkenntnis der Erfindung dazu, den Füllstoff, insbesondere die Aerogele, einzulagern und zu ummanteln.

Mit der Erfindung ist es überraschenderweise möglich, mit umweltfreundlichen, lösungsmittelfreien Klebersystemen, Bindemitteln oder Bindemittelsystemen, insbesondere den hydrophoben Charakter hydrophober Füllstoffe, insbesondere der wegen ihres hohen Wärmedämmvermögens bevorzugten Aerogele, beizubehalten und neuartige Verbundmaterialien beliebiger Form mit hohem Wärmedämmvermögen herzustellen.

Als Hilfsstoffe können bei der Herstellung als weitere Komponenten feste, kolloidal verteilte Stoffe wie Gelatine, Kieselsäure, Montmorillonit, Bentonite, ferner Polysaccharide, Pektine und andere Verdickungs- oder Geliermittel zugefügt werden. Die Hilfsstoffe sind, bezogen auf Trockensubstanz in einer Menge von 0,1 bis 5 %, bevorzugt von 0,1 bis 2 %, einsetzbar.

Gemäß einer besonders bevorzugten Ausbildung des Verfahrens zur Herstellung von leichten Verbundmaterialien beliebiger Form bzw. von Oberflächenbeschichtungen wird das Bindergemisch als Schaum oder als erdfeuchte Mischung ohne weitere Energiezufuhr bei Raumtemperatur verfestigt, und zwar unter Verwendung einer Bindemitteldispersion, die einen Filmbildner enthält. Dabei wird das Bindemittel aufgeschäumt und der hydrophobe, thermisch isolierend wirkende Füllstoff eindispergiert. Die Mischung kann als erdfeuchte Formulierung oder als leichter Schaum in Formen gegossen oder gespritzt oder als Leichtputz an Wänden aufgetragen oder gespritzt werden, worauf diese zu erstarrtem Wärmedämmaterial mit guter Grünfestigkeit getrocknet wird.

Nach der Erfindung wird in überraschender Weise die Herstellung von Dämmaterialien nach einem Verfahren mit wenigen Verfahrensschritten und mit einer schnellen Verfestigung des wäßrigen, in Formen gegossenen oder gespritzten Masse erreicht. Die von der unmittelbar auf das zum Mischen der Binderkomponenten zu den Leichtstoffkomponenten folgende und bis zur Verfestigung (Grünfestigkeit) reichende Zeit, nach deren Ablauf die Formkörper ohne Gefahr des leichten Ausbrechens von Teilen durchführbar ist, beträgt 0,3 bis 30 min. Die ausgeformten Teile gestatten ein Umsetzen der Formkörper, so daß nach der Entschalung die Formen wieder in Betrieb genommen werden können. Es werden Dämmaterialien mit einer Rohdichte im Bereich von 30 bis 400 kg/m³ erhalten. Die Wärmeleitfähigkeit dieser Materialien liegt im Bereich von 16 bis 70 mW m⁻¹ K⁻¹, jedenfalls aber unter 100 mW m⁻¹ K⁻¹.

Insbesondere beim Aufsprühen/Aufspritzen der Mischung auf Untergründen oder in Formen wurden niedrige Rohdichten durch erhöhte Zugabe des Schaummittels zu Binderkomponenten erzielt.

Das Aufspritzen des Dämmaterials kann mit einem Spritzverfahren in folgender Weise durchgeführt werden:

Die flüssige Binderkomponente wird mit Schaumbildnem, insbesondere Tensiden, gemischt, wird unter hohem Druck in eine Mischkammer eingespritzt und dort infolge des hohen Drucks einer der Mischkammer unmittelbar nachgeschalteten Expansionsdüse zugeleitet, in die dosierte Druckluft eingeblasen wird und die den Binder aufschäumt. In die Mischung wird Druckluft durch einen Förderschlauch in der Mischkammer zugeblasen, oder sie wird dem Binderschaum hinter der Expansionsdüse zugemischt. So erfolgt vorzugsweise das Auf/Einspritzen der Wärmedämmischung in Formen oder an Wände.

Weiter ist das Aufspritzen der Formulierung, Mischung oder Masse in einer bestimmten Form nach dem Injektorprinzip möglich. Das Aufspritzen ist auch mit Spritzpistolen möglich. Als Spritzpistolen eignen sich alle Spritzpistolen, die zum Auftragen von Beschichtungsmaterialien, insbesondere von kornhaltigen pastösen Massen für bauliche und industrielle Zwecke geeignet sind.

Spritzpistolen dieser Art werden in der DE 198 14 532 A1 und der DE 44 28 634 A1 beschrieben.

Darüber hinaus sollten allerdings die Düsen der Pistolen mindestens 4 mm größer sein als das größte zu erwartende Aerogel-Partikel. Die Preßluft hat außerdem ca. 2 bis 4 bar Überdruck.

Im Gegensatz zu den Standardbeschichtungsmaterialien neigt die fertige aufgeschäumte Mischung zur Brückenbildung. Zum Übergehen dieses Problems muß die fertige Mischung, zur weitestgehenden Einschränkung bzw. Vermeidung einer Brückenbildung, im Kreislauf ohne Stillstandszeiten transportiert werden. Aus diesem Förderkreislauf wird die Mischung über ein Saugrohr oder eine Förderleitung mittels Unterdruck oder Überdruck der Mischung im Ausgabeteil (Mischkammer) zugeführt, mit der Preßluft vermischt und aus der Austrittsdüse durch Expansion der Preßluft verteilt

Insbesondere ist nach dem Eindispergieren des hydrophoben Füllstoffs eine Verformung der wäßrigen, pastösen Masse und eine anschließende Trocknung derselben vorgesehen.

Die Erfindung führt weiter auf die Verwendung einer formbaren plastischen Masse und eines Verbundmaterials als Isoliermaterial für Wärme und Kälte, das sich wegen seines geringen spezifischen Gewichts zur Verwendung als Leichtisolierstoff eignet. Die gemäß der Erfindung hergestellte Masse und das Verbundmaterial findet insbesondere Verwendung als Beschichtung von Oberflächen aller Art anorganischen oder organischen Ursprungs, zum Beispiel zur Beschichtung von Metallen in Form von Autoblechen ebenso wie zur Beschichtung von Holz, Glas, Kunststoffen und Metallen aller Art.

Bevorzugte Ausführungsformen der Erfindung werden durch die nachfolgenden Beispiele erläutert.

### Beispiel 1:

- Herstellung eines Schaums aus 2,5 % eines Celluloseethers, 65 % Wasser, 0,5 % Schaumbildner,
- Erzeugung des Schaums (Schäumen),
- Einarbeiten der festen Substanz 32 % Aerogel,
- Herstellung einer leichten schaumigen Masse unter Beibehalt der Hydrophobie der Aerogele,
- Formgebung des Schaums,
- Trocknung bei 100 °C.

Die Dichte beträgt ca. 80 kg/m³ bei einer Wärmeleitfähigkeit von ca. 18 mW / m K. Anwendungstemperatur ca. 200 °C.

### Beispiel 2:

- Herstellung eines Schaums 57 % Bindemittel/Filmbildner Lefasol 48/90 NV 0,5 % Schaumbildner,
- Erzeugung des Schaums (Schäumen),
- Einarbeiten der festen Substanz 42,5 % Aerogel,
- Herstellung einer leichten schaumigen Masse unter Beibehalt der Hydrophobie der Aerogele,
- Formgebung des Schaums,
- Trocknung bei 100 °C.

Die Dichte beträgt ca. 100 kg/m³ bei einer Wärmeleitfähigkeit von ca. 21 mW/m K. Anwendungstemperatur ca: 100 °C.

### Beispiel 3

- Herstellung eines Schaums 42 % Bindemittel/Filmbildner Lefasol VS3, 26,5 % Wasser, 1,5 % Schaumbildner,
- Erzeugung des Schaums (Schäumen)
- Einarbeiten der festen Substanz 30 % Aerogel,
- Herstellung einer leichten schaumigen Masse unter Beibehalt der Hydrophobie der Aerogele,
- Formgebung des Schaums,
- Trocknung bei 100 °C.

Die Dichte beträgt ca. 110 kg/m³ bei einer Wärmeleitfähigkeit von ca. 24 mW / m K. Anwendungstemperatur ca. 280 °C.

### Beispiel 4

- Herstellung eines Schaums 65 % Bindemittel/Filmbildner Lefasol 910, 0,5 % Schaumbildner,
- Erzeugung des Schaums (Schäumen)
- Einarbeiten der festen Substanz 34,5 % Aerogel,
- Herstellung einer leichten schaumigen Masse unter Beibehalt der Hydrophobie der Aerogele,
- Formgebung des Schaums,
- Trocknung bei 100 °C.

Die Dichte beträgt ca. 95 kg/m³ bei einer Wärmeleitfähigkeit von ca. 21 mW / m K. Anwendungstemperatur ca. 200 °C.

### Beispiel 5

- Herstellung eines Schaums 27 % Bindemittel/Filmbildner Lefasol 48/90 NV, 0,2 % Schaumbildner,
- Erzeugung des Schaums (Schäumen)
- Einarbeiten der festen Substanz 72,8 % Microspheres, z. B. Expancel 461 WU,
- Herstellung einer leichten schaumigen Masse,
- Formgebung des Schaums,
- Trocknung bei 100 °C.

Die Dichte beträgt ca. 130 kg/m³ bei einer Wärmeleitfähigkeit von ca. 58 mW/m K. Anwendungstemperatur ca. 150 °C.

### Beispiel 6

- Herstellung eines Schaums 35 % Bindemittel/Filmbildner Lefasol 48/90 NV, 0,3 % Schaumbildner,
- Erzeugung des Schaums (Schäumen)
- Einarbeiten der festen Substanz 27,5 % Microspheres, z. B. Expancel 461 WU, 37,3. % Aerogel,
- Herstellung einer leichten schaumigen Masse unter Beibehalt der Hydrophobie der Aerogele,
- Formgebung des Schaums,
- Trocknung bei 100 °C.

Die Dichte beträgt ca. 120 bis 150 kg/m³ bei einer WärmeleitFähigkeit von ca. 30 bis 65 mW / m K. Anwendungstemperatur ca. 150 °C.

### Beispiel 7

- Herstellung einer plastischen Masse 42,0 % Bindemittel/Filmbildner Lefasol VD 30, 0,3 % Schaumbildner,
- Erzeugung des Schaums (Schäumen)
- Einarbeiten der festen Substanz 15,5 % Microspheres, z. B. Expancel 461 WU, 15,5 % Aerogel, 26,7 % Blähgraphit 35,
- Herstellung einer leichten formbaren Masse unter Beibehalt der Hydrophobie der Aerogele,
- Formgebung der Masse,
- Trocknung bei 100 °C.

Die Dichte beträgt ca. 180 kg/m³ bei einer Wärmeleitfähigkeit von ca. 30 bis 65 mW / m K. Anwendungstemperatur ca. 180 °C.

### Beispiel 8

- Herstellung eines Schaums 55 % Bindemittel/Filmbildner Hagepol 910, 025 % Schaumbildner,
- Erzeugung des Schaums (Schäumen)
- Einarbeiten der festen Substanz 44,75 % Aerogel,
- Herstellung einer leichten formbaren Masse unter Beibehalt der Hydrophobie der Aerogele,
- Formgebung des Schaums,
- Trocknung bei 100 °C.

### Beispiel 9

- Herstellung eines Schaums 54 % Bindemittel/Filmbildner Hagepol 910,3 % Flammschutzmittel, z. B. Lefasol 449, 0,5 % Schaumbildner,
- Erzeugung des Schaums (Schäumen)
- Einarbeiten der festen Substanz 42,5 % Aerogel,
- Herstellung einer leichten formbaren Masse unter Beibehalt der Hydrophobie der Aerogele,
- Formgebung des Schaums,
- Trocknung bei 100 °C.

Die Dichte beträgt ca. 100 kg/m³ bei einer Wärmeleitfähigkeit von ca. 23 mW/m K. Anwendungstemperatur ca. 180 °C.

### Beispiel 10

- Herstellung eines Schaums 50 % Bindemittel/Filmbildner Lefasol VD170, 15 % Bindemittel/Gelbilder Lefasol VF 28, 05 % Schaumbildner,
- Erzeugung des Schaums (Schäumen)
- Einarbeiten der festen Substanz 34,5 % Aerogel,
- Herstellung einer leichten formbaren Masse unter Beibehalt der Hydrophobie der Aerogele, .
- Formgebung des Schaums, Verfestigung der Mischung nach ca. 2 min,
- Trocknung bei 100 °C.

Die Dichte beträgt ca. 80 kg/m³ bei einer Wärmeleitfähigkeit von ca. 21 mW / m K. Anwendungstemperatur ca. 220 bis 240 °C.

### Beispiel 11

- Herstellung eines Schaums 22 % Bindemittel/Filmbildner Lefasol VS 3, 22 % Bindemittel/Filmbildner Lefasol VS 5, 22 % Bindemittel/Filmbildner Lefsol VS 6, 16 % Wasser, 1 % Schaumbildner,
- Erzeugung des Schaums (Schäumen)
- Einarbeiten der festen Substanz 17 % Aerogel,
- Herstellung einer leichten formbaren Masse unter Beibehalt der Hydrophobie der Aerogele,
- Formgebung des Schaums, Verfestigung der Mischung nach ca. 2 min,
- Trocknung bei 100 °C.

Die Dichte beträgt ca. 120 kg/m³ bei einer Wärmeleitfähigkeit von ca. 24 mW / m K. Anwendungstemperatur ca. 280 bis 300 °C.

## Patentansprüche

1. Verfahren zur Herstellung einer formbaren, plastischen Masse, bei dem wenigstens aus
- einem Bindemittel, das zu überwiegendem Teil eine wäßrige Polymerdispersion aus der Gruppe, bestehend aus: Polyacrylaten, Polyurethanen, Cycloolefin-Copolymeren, Ethylen-Vinylacetat-Copolymeren, Styrol-Butadien-Copolymeren, Styrol-Acrylat-Copolymeren, Siliconen, Isocyanatsystemen und Celluloseethem, enthält, und
- einem Schaumbildungsmittel,
- ein flüssiges Bindergemisch gebildet wird, und zunächst
- das flüssige Bindergemisch, entweder mechanisch und/oder mittels Injektion eines Gases in das flüssige Bindergemisch, aufgeschäumt wird, und dann
- ein hydrophober, thermisch isolierend wirkender Füllstoff, insbesondere ein hydrophobes Aerogel, in das aufgeschäumte Bindergemisch unter Bildung der formbaren plastischen Masse eingebracht wird.

2. Verfahren zur Herstellung eines Verbundmaterials, bei dem wenigstens aus
- einem Bindemittel das zu überwiegendem Teil eine wäßrige Polymerdispersion aus der Gruppe, bestehend aus: Polyacrylaten, Polyurethanen, Cycloolefin-Copolymeren,
- Ethylen-Vinylacetat-Copolymeren, Styrol-Butadien-Copolymeren, Styrol-Acrylat-Copolymeren, Siliconen, Isocyanatsystemen und Celluloseethem, enthält, und
- einem Schaumbildungsmittel,
- ein flüssiges Bindergemisch gebildet wird, und zunächst
- das flüssige Bindergemisch, entweder mechanisch und/oder mittels Injektion eines Gases in das flüssige Bindergemisch, aufgeschäumt wird, und dann
- ein hydrophober, thermisch isolierend wirkender Füllstoff, insbesondere ein hydrophobes Aerogel, in das aufgeschäumte Bindergemisch unter Bildung einer formbaren plastischen Masse eingebracht wird, und .
- die plastische Masse in einer bestimmten Form verfestigt wird.

3. Verfahren nach einem der vorhergehenden Ansprüche, **dadurch gekennzeichnet, daß** ein anorganisches Verdickungsmittel, insbesondere Polykieselsäure, Tonmineralien, vorzugsweise Montmorillonite, Zeolithe und Kieselsäuren, in das Bindergemisch eingebracht werden.

4. Verfahren nach einem der vorhergehenden Ansprüche, **dadurch gekennzeichnet, daß** das hydrophobe Aerogel aerogele Partikel aufweist, deren hydrophoben Oberflächengruppen von einem Filmbildner überzogen werden.

5. Verfahren nach einem der vorhergehenden Ansprüche, **dadurch gekennzeichnet, daß** das Bindemittel in Verbindung mit einem Schaumbildungsmittel aus der Gruppe bestehend aus: Alkyldimethylaminoxid, Alkylsulfonat, Festtsäuremethyltaurid-Na, Sulfosuccinat, Oxoalkoholoxethylat, Nonylphenolexethat und Alkylarypolyglykolethersulfat-Na, für die Bildung eines Schaumnetzes aufgeschäumt wird.

6. Verfahren nach einem der vorhergehenden Ansprüche, **dadurch gekennzeichnet, daß** die plastische Masse im verfestigten Zustand, bezogen auf die bis zur Gewichtskonstanz verfestigte, insbesondere bei 105 °C getrocknete, plastische Masse, in einer Dichte der Masse von 30 kg m⁻³ bis 400 kg m⁻³ vorliegt.

7. Verfahren nach einem der vorhergehenden Ansprüche, **dadurch gekennzeichnet, daß** die plastische Masse im verfestigten Zustand, bezogen auf die bis zur Gewichtskonstanz verfestigte, insbesondere bei 105 °C getrocknete, plastische Masse, bei einer Temperatur im Bereich von 30 °C eine Wärmeleitfähigkeit von weniger als 100 mW m⁻¹ K⁻¹ aufweist, aber mehr als 15 mW m⁻¹ K⁻¹, insbesondere eine Wärmeleitfähigkeit im Bereich von 16 bis 70 mW m⁻¹ K⁻¹.

8. Verfahren nach einem der vorhergehenden Ansprüche, **dadurch gekennzeichnet, daß** die plastische Masse als schaumiger Schlicker vorliegt und derart formbar ist, daß sie in Formen gegossen, zu Formteilen geformt oder gespritzt oder als Leichtputz an Wänden oder Platten aufgetragen wird.

9. Verfahren nach einem der vorhergehenden Ansprüche, **dadurch gekennzeichnet, daß** die plastische Masse in verschiedenen Konzentrationen wasserlösliche Polymerdispersionen enthält, in reiner Form oder in Mischungen Styrol, Acrylnitril, Butadien, Ethylacrylat, Butylacrylat, Ethylhexylacrylat, Methylmethacrylat, Acrylamid, N-Methylolacrylamid, Ethylen, Vinylacetat, Dibutylmaleinnat, Vinylchlorid, Viylidenchlorid, Polyvinylalkohol enthält.

10. Verfahren nach einem der vorhergehenden Ansprüche, **dadurch gekennzeichnet, daß** die plastische Masse in verschiedenen Konzentrationen Celluloseether, Methylcellulose; Carboxymethylcellulose oder Hydroxyethylcellulose enthält.

11. Verwendung einer nach einem der Ansprüche 1 oder 3 bis 10 hergestellten plastischen Masse zur Bildung eines Leichtisoliermaterials, insbesondere einer Leichtisöliermaterial-Beschichtung.

12. Verwendung eines nach einem der Ansprüche 2 bis 10 hergestellten Verbundmaterials als Leichtisoliermaterial, insbesondere als Leichtisoliermaterial-Beschichtung.

13. Nach einem der Ansprüche 1 oder 3 bis 10 hergestellte formbare plastische Masse, mit einer Wärmeleitfähigkeit im Bereich von we- , niger als 100 mW m⁻¹ K⁻¹, aber mehr als 15 mW m⁻¹ K⁻¹, und einer spezifischen Dichte im Bereich von 30 bis 400 kg m⁻³.

14. Nach einem der Ansprüche 2 bis 10 hergestelltes Verbundmaterial, mit einer Wärmeleitfähigkeit im Bereich von weniger als 100 mW m⁻¹ K⁻¹, aber mehr als 15 mW m⁻¹ K⁻¹, und einer spezifischen Dichte im Bereich von 30 bis 400 kg m⁻³.

## Claims

1. A method for the production of a moldable, plastic mass, in which method at least
- one liquid mixture of binders is formed from
- a binding agent predominantly containing an aqueous polymer dispersion from the group consisting of: polyacrylates, polyurethanes, cycloolefin copolymers, ethylene-vinyl acetate copolymers, styrenebutadiene copolymers, styrene-acrylate copolymers, silicones, isocyanate systems, and cellulose ethers, and
- a foaming agent, and initially,
- the liquid mixture of binders is foamed either mechanically and/or by injecting a gas into the liquid mixture of binders, and subsequently,
- a hydrophobic, thermally insulating filler, particularly a hydrophobic aerogel, is incorporated in the foamed mixture of binders to form said moldable plastic mass.

2. A method for the production of a composite material, in which method at least
- one liquid mixture of binders is formed from
- a binding agent predominantly containing an aqueous polymer dispersion from the group consisting of: polyacrylates, polyurethanes, cycloolefin copolymers, ethylene-vinyl acetate copolymers, styrenebutadiene copolymers, styrene-acrylate copolymers, silicones, isocyanate systems, and cellulose ethers, and
- a foaming agent, and initially,
- the liquid mixture of binders is foamed either mechanically and/or by injecting a gas into the liquid mixture of binders, and subsequently,
- a hydrophobic, thermally insulating filler, particularly a hydrophobic aerogel, is incorporated in the foamed mixture of binders to form a moldable plastic mass, and
- the plastic mass is solidified in a specific form.

3. The method according to any of the preceding claims, **characterized in that** an inorganic thickening agent, especially polysilicic acid, clay minerals, preferably montmorillonites, zeolites and silicic acids, is incorporated in the mixture of binders.

4. The method according to any of the preceding claims, **characterized in that** the hydrophobic aerogel has aerogel particles, the hydrophobic surface groups of which being coated with a film-forming agent.

5. The method according to any of the preceding claims, **characterized in that** the binding agent is foamed together with a foaming agent from the group consisting of: alkyldimethylamine oxide, alkylsulfonate, fatty acid methyltauride Na, sulfosuccinate, oxoalcohol oxethylate, nonylphenol exethate and alkylarylpolyglycol ether sulfate Na, to form a foam network.

6. The method according to any of the preceding claims, **characterized in that** the plastic mass, in solidified condition, relative to the plastic mass solidified to constant weight, particularly dried at 105°C, is present with a density of the mass of from 30 kg·m³ to 400 kg·m³.

7. The method according to any of the preceding claims, **characterized in that** the plastic mass, in solidified condition, relative to the plastic mass solidified to constant weight, particularly dried at 105°C, has a heat conductivity of less than 100 mW·m⁻¹·K⁻¹ at a temperature within a range of 30°C, but more than 15 mW.m-K⁻¹, and particularly a heat conductivity ranging from 16 to 70 mW·m⁻¹·K⁻¹.

8. The method according to any of the preceding claims, **characterized in that** the plastic mass is present in the form of a foamy slurry and is moldable in such a way that the mass is cast in molds, molded or injected into molded articles, or applied as light-weight rendering on walls or boards.

9. The method according to any of the preceding claims, **characterized in that** the plastic mass includes watersoluble polymer dispersions at varying concentrations, and includes styrene, acrylonitrile, butadiene, ethyl acrylate, butyl acrylate, ethylhexyl acrylate, methyl methacrylate, acrylamide, N-methylolacrylamide, ethylene, vinyl acetate, dibutyl maleate, vinyl chloride, vinylidene chloride, poly(vinyl alcohol) in pure form or as mixtures.

10. The method according to any of the preceding claims, **characterized in that** the plastic mass includes cellulose ethers, methylcellulose, carboxymethylcellulose or hydroxyethylcellulose at varying concentrations.

11. Use of a plastic mass produced according to any of claims 1 or 3 to 10 to form a light-weight insulating material, especially a coating of a light-weight insulating material.

12. Use of a composite material produced according to any of claims 2 to 10 as a light-weight insulating material, especially as a coating of a light-weight insulating material.

13. A moldable plastic mass produced according to any of claims 1 or 3 to 10, which has a heat conductivity in a range of less than 100 mW·m⁻¹·K⁻¹, but more than 15 mW·m⁻¹·K⁻¹, and a specific density ranging from 30 to 400 kg·m³.

14. A composite material produced according to any of claims 2 to 10, which has a heat conductivity in a range of less than 100 mW·m⁻¹·K⁻¹, but more than 15 mW·m⁻¹·K⁻¹, and a specific density ranging from 30 to 400 kg·m³.

## Revendications

1. Procédé de fabrication d'une masse plastique façonnable, dans lequel on forme
- un mélange liant liquide au moins à partir
- d'un liant qui contient en majeure partie une dispersion polymère aqueuse du groupe constitué de polyacrylates, de polyuréthanes, de copolymères de cyclooléfine, de copolymères d'éthylène et d'acétate de vinyle, de copolymères de styrène et de butadiène, de copolymères de styrène et d'acrylate, de silicones, de systèmes isocyanate et d'éthers de cellulose et
- d'un agent de moussage ; et dans lequel, tout d'abord
- on fait mousser le mélange liant liquide, soit mécaniquement et/ou par injection d'un gaz dans le mélange liant liquide, puis
- on introduit une charge hydrophobe, agissant comme un isolant thermique, en particulier un aérogel hydrophobe, dans le mélange liant moussé en formant la masse plastique façonnable.

2. Procédé de fabrication d'un matériau composite, dans lequel on forme
- un mélange liant liquidé au moins à partir
- d'un liant qui contient en majeure partie une dispersion polymère aqueuse du groupe constitué de polyacrylates, de polyuréthanes, de copolymères de cyclooléfine, de copolymères d'éthylène et d'acétate de vinyle, de copolymères de styrène et de butadiène, de copolymères de styrène et d'acrylate, de silicones, de systèmes isocyanate et d'éthers de cellulose et
- d'un agent de moussage ; et dans lequel, tout d'abord
- on fait mousser le mélange liant liquide, soit mécaniquement et/ou par injection d'un gaz dans le mélange liant liquide, puis
- on introduit une charge hydrophobe, agissant comme un isolant thermique, en particulier un aérogel hydrophobe, dans le mélange liant moussé en formant la masse plastique façonnable et
- on solidifie la masse plastique dans une certaine forme.

3. Procédé selon l'une quelconque des revendications précédentes, **caractérisé en ce qu'**on introduit un épaississant inorganique, en particulier de l'acide polysilicique, des minéraux argileux, de préférence des montmorillonites, des zéolithes et des acides siliciques, dans le mélange liant.

4. Procédé selon l'une quelconque des revendications précédentes, **caractérisé en ce que** l'aérogel hydrophobe présente des particules aérogels dont les groupes superficiels hydrophobes sont recouverts d'un agent filmogène.

5. Procédé selon l'une quelconque des revendications précédentes, **caractérisé en ce que** le liant est moussé en liaison avec un agent de moussage du groupe constitué d'aminoxyde d'alkyldiméthyle, de sulfonate d'alkyle, de méthyltauride d'acides gras - Na, de sulfosuccinate, d'oxyéthylate d'oxoalcools; de nonylphénolexéthate et de sulfate d'éther d'alkylarylpolyglycol - Na, pour former un réseau de mousse.

6. Procédé selon l'une quelconque des revendications précédentes, **caractérisé en ce que** la masse plastique à l'état solidifié a une densité de la masse de 30 kg m⁻³ à 400 kg m⁻³ par rapport à la masse plastique solidifiée jusqu'à la constance pondérale, en particulier séchée à 105°C.

7. Procédé selon l'une quelconque des revendications précédentes, **caractérisé en ce que** la masse plastique à l'état solidifié, par rapport à la masse plastique solidifiée jusqu'à la constance pondérale, en particulier séchée à 105°C, à une température de l'ordre de 30°C, présente une conductivité thermique inférieure à 100 mW m⁻¹ K⁻¹, mais supérieure à 15 mW m⁻¹ K⁻¹, en particulier une conductivité thermique de l'ordre de 16 à 70 mW m⁻¹ K⁻¹.

8. Procédé selon l'une quelconque des revendications précédentes, **caractérisé en ce que** la masse plastique se présente sous forme de barbotine mousseuse et peut être façonnée de manière à pouvoir être versée dans des moules, façonnée ou injectée en pièces moulées ou appliquée, en tant que crépi léger, sur des murs ou des panneaux.

9. Procédé selon l'une quelconque des revendications précédentes, **caractérisé en ce que** la masse plastique contient, dans différentes concentrations, des dispersions polymères hydrosolubles, sous forme pure ou en mélanges, du styrène, de l'acrylonitrile, du butadiène, de l'acrylate d'éthyle, de l'acrylate de butyle, de l'acrylate d'éthylhexyle, du méthacrylate de méthyle, de N-méthylolacrylamide, du l'acrylamide, de l'éthylène, de l'acétate de vinyle, du maléinate de dibutyle, du chlorure de vinyle, du chlorure de vinylidène, de l'alcool polyvinylique.

10. Procédé selon l'une quelconque des revendications précédentes, **caractérisé en ce que** la masse plastique contient, dans différentes concentrations, de l'éther de cellulose, de la méthylcellulose, de la carboxyméthylcellulose et de l'hydroxyméthylcellulose.

11. Utilisation d'une masse plastique fabriquée selon l'une quelconque des revendications 1 ou 3 à 10 pour former un matériau isolant léger, en particulier un revêtement de matériau isolant léger.

12. Utilisation selon l'une quelconque des revendications 2 à 10 d'un matériau composite fabriqué en tant que matériau isolant léger, en particulier en tant que revêtement de matériau isolant léger.

13. Masse plastique façonnable fabriquée selon l'une quelconque des revendications 1 ou 3 à 10, ayant une conductivité thermique de l'ordre de moins de 100 mW m⁻¹ K⁻¹, mais de plus de 15 mW m⁻¹ K⁻¹, et une densité spécifique de l'ordre de 30 à 400 kg m⁻³.

14. Matériau composite façonnable fabriqué selon l'une quelconque des revendications 2 à 10, ayant une conductivité thermique de l'ordre de moins de 100 mW m⁻¹ K⁻¹, mais de plus de 15 mW m⁻¹ K⁻¹, et une densité spécifique de l'ordre de 30 à 400 kg m⁻³.
